# EUROPEAN PATENT APPLICATION

(11) **EP 1 905 744 A1**
(43) Date of publication of application: **02.04.2008**
(21) Application number: 07004392.2
(22) Date of filing: 02.03.2007
(51) Int. Cl.: C02F 3/12, C02F 1/78

(54) **System and method for treating wastewater**

(30) Priority: 29.09.2006 US 848151 P; 02.11.2006 US 591894
(71) Applicant: PRAXAIR TECHNOLOGY, INC., Danbury, CT 06810-5113 (US)
(72) Inventor: Fabiyi, Malcom Ezekiel, Chicago, Illinois 60563, (US); Novak, Richard A., Naperville, IL 60564 (US)
(74) Representative: Schwan - Schwan - Schorer

(57) **Abstract**

A system and method for the treatment of wastewater is disclosed. The disclosed wastewater treatment system (10) includes a high selectivity reactor (30) coupled to a wastewater treatment reactor (20), such as an activated sludge treatment basin, membrane bioreactor or sequencing batch reactor. The high selectivity reactor (30) is adapted to receive a liquid stream containing biosolids diverted directly or indirectly from the wastewater treatment reactor. The wastewater treatment system (10) also includes a chemical injection subsystem (44,46) operatively coupled to the high selectivity reactor (30) and adapted to inject a chemical, such as ozone-enriched gas, into the diverted liquid stream to effect highly selective treatment of the diverted stream. The treated liquid stream is subsequently sent via a return line (50) to the continuously stirred tank reactor (20) or other discharge point (23).

## Description

### Cross Reference To Related Applications

This application claims priority to United States provisional patent application serial number 60/848,151 filed September 29, 2006.

### Field of the Invention

The present invention relates to methods and systems for wastewater treatment and more particularly, to the utilization of a wastewater treatment reactor together with a high selectivity reactor in the activated sludge treatment process.

### Background

Traditional methods of wastewater treatment involve bringing wastewater streams into contact with bacteria either in an aerobic or anaerobic type process in what is known as activated sludge treatment. These bacteria consume parts of the substrate material or waste contained in the wastewater, which are typically organic compounds containing carbon, nitrogen, phosphorus, sulfur, and the like. Typically, a portion of the waste is consumed to further the metabolism of the bacterial cells or maintain the physiological functioning of the bacterial cells. In addition, a portion of the waste is also consumed as part of the process of synthesis of new bacterial cells. The activated sludge treatment process yields a certain amount of sludge and associated solids which must be continuously removed from the treatment basin to maintain the steady state sludge balance which is critical to the effective functioning of the activated sludge treatment system.

In order to maintain waste removal capacity of the treatment plant at steady state it is important to control the generation of new bacterial cells within the activated sludge treatment process. Too much synthesis of new bacterial cells in excess of what is required for the treatment of the waste at or near steady state results in excess biosolids formation attributable to the accumulation of such newly synthesized but unneeded bacterial cells. This excess biosolids must be continuously removed during the activated sludge treatment process.

Existing methods for dealing with the removal of sludge includes transporting the sludge to landfills, utilization of sludge for land application or agricultural purposes, and incineration of the sludge. Most sludge disposal operations require some prior treatment of the sludge; a process known in the art as solids handling. Solids handling processes are often costly and time consuming operations and typically involve one or more of the following steps: (a) the concentration of the sludge in a thickener, usually requiring the use of polymers; (b) digestion of the sludge in order to stabilize the bacteria and to further reduce the volume and pathogen content of the sludge; (c) dewatering of the sludge to reach approx 15-25% solids content; which involves the passage of the sludge through centrifuges or other solid-liquid separation type devices; (d) storage of the sludge; and (e) transportation to sites for landfill, land application by farmers, or other end use.

It is estimated that the costs associated with solids handling and disposal processes can be between 20-60% of total operating costs associated with the overall wastewater treatment process. Due to the cost and time associated with solids handling and disposal, it is beneficial to minimize the amount of excess sludge produced in the wastewater treatment process.

In conventional activated sludge treatment systems and methods, oxygen is required both for the chemical oxidation of the substrate material (i.e. waste) as well as for the synthesis of new cells and metabolic processes of the bacterial cells. Use of ozone in addition to oxygen for the treatment of sludge has also been reported. More particularly, ozone treatment of sludge has been reported in combination with mechanical agitators and/or a pump providing the motive mixing. The sludge-ozone contact typically occurs in a continuously stirred tank reaction (CSTR) mode, and lysis (breaching of the integrity of the cell wall) results as a consequence of the strong oxidizing action of ozone on the cell walls. Lysis leads to the release of the substrate rich cellular content of the bacterial cells. In this way, the solid cells which would otherwise have been discharged as excess sludge are lysed, and by so doing, they are transformed to substrate which can then be consumed by bacteria in the treatment basin.

The cellular content is a liquid matrix which is comprised of proteins, lipids, polysaccharides and other sugars, DNA, RNA and organic ions. Because of the low selectivity that occurs when sludge ozone contacting is carried out in a continuously stirred reactor mode, excessive amounts of ozone are consumed using prior methods for sludge ozonation. In addition, some prior reported uses of ozone required specialized pre-treatment or modification of the sludge. Such pretreatments and modifications may include adjusting the pH of the sludge, increasing the temperature of the sludge, increasing the pressure of the ozone treatment vessel, or passing the sludge through anaerobic predigestion steps. Thus, the prior use of ozone in the treatment of sludge involved additional complexity, materials, equipment and the increased costs associated therewith.

Three major methods for reactor systems are known, these being the Continuously Stirred Tank Reactor system (CSTR), the higher selective Plug Flow Reactor (PFR) and the Batch Reactor System (BRS). The major difference between the different reactor modes lies fundamentally in: (i) the average amount of time that a molecule stays within the reaction space, also known as the residence time; (ii) the interaction between reacting 'parcels' e.g., there is significant back-mixing in the CSTR, while the PFR is characterized by very limited, if any, back-mixing; and (iii) the yield obtained.

### Summary of the Invention

The invention may be broadly characterized as a method of treating wastewater. The disclosed method includes the known steps of receiving an influent of wastewater into a wastewater treatment reactor, oxidizing the mixed liquor and discharging a liquid stream from the basin. In addition, the disclosed method of treating wastewater also comprises the steps of diverting a portion of the liquid stream discharged from the wastewater treatment reactor to a high selectivity treatment reactor; introducing a prescribed chemical such as ozone or other agent to the high selectivity treatment reactor for treatment of the liquid stream; and returning the treated liquid stream to the wastewater treatment reactor.

The invention may also be characterized as a wastewater treatment system comprising: a wastewater treatment reactor for receiving an influent of wastewater and discharging a liquid stream; a diversion conduit adapted for diverting a portion of the liquid stream discharged from the wastewater treatment reactor to a high selectivity treatment reactor. The wastewater treatment system also includes a chemical injection subsystem disposed in operative association with the high selectivity treatment reactor to introduce a prescribed chemical to the high selectivity treatment reactor for treatment of the liquid stream. The prescribed chemical may be ozone or other industrial gas mixture useful in wastewater treatment operations, or alternatively may be some other agent such as an odor control agent, biocide, conditioner, catalyst, etc.

### Brief Description of the Drawings

The above and other aspects, features, and advantages of the present invention will be more apparent from the following, more detailed description thereof, presented in conjunction with the following drawings, wherein:

Fig. 1 is a schematic representation of an activated wastewater treatment system incorporating an embodiment of the present system and process;

Fig. 2 is a graph that depicts the operating performance of an excess sludge treatment process in accordance with the presently disclosed embodiments;

Fig. 3 is a schematic representation of an alternate embodiment of the present system and process wherein ozone-enriched gas is introduced at multiple locations within the high selectivity reactor;

Fig. 4 is a schematic representation of another alternate embodiment of the present system wherein the discharge line from the reactor is coupled to some other sludge post-treatment process downstream of the reactor;

Fig. 5 is a schematic representation of still another alternate embodiment of the present system wherein the ozone-enriched gas injection system injects the ozone-enriched gas at or near the pump associated with the reactor;

Fig. 6 is yet another embodiment of the present system and process where sludge is preprocessed prior to the high selectivity reactor;

Fig. 7 is yet another alternate embodiment of the present system wherein the gas-liquid contacting between the ozone-enriched gas and liquid stream occurs upstream of the reactor; and

Fig. 8 is yet another embodiment of the present system wherein the treated liquid stream is a mixed liquor stream from the activated sludge basin.

Corresponding reference numbers indicate corresponding components throughout the several views of the drawings.

### Detailed Description

In conventional activated sludge treatment systems and methods, oxygen is required both for the chemical oxidation of the substrate material as well as for new cell synthesis and metabolic processes of the bacterial cells. The oxygen requirement for the chemical oxidation of the substrate material in the treatment process is often referred to as the Chemical Oxygen Demand (COD) whereas the oxygen requirement for the removal of the substrate via the consumption of substrate for new cell synthesis and the maintenance of metabolic processes of the bacterial cells is referred to as the Biological Oxygen Demand (BOD).

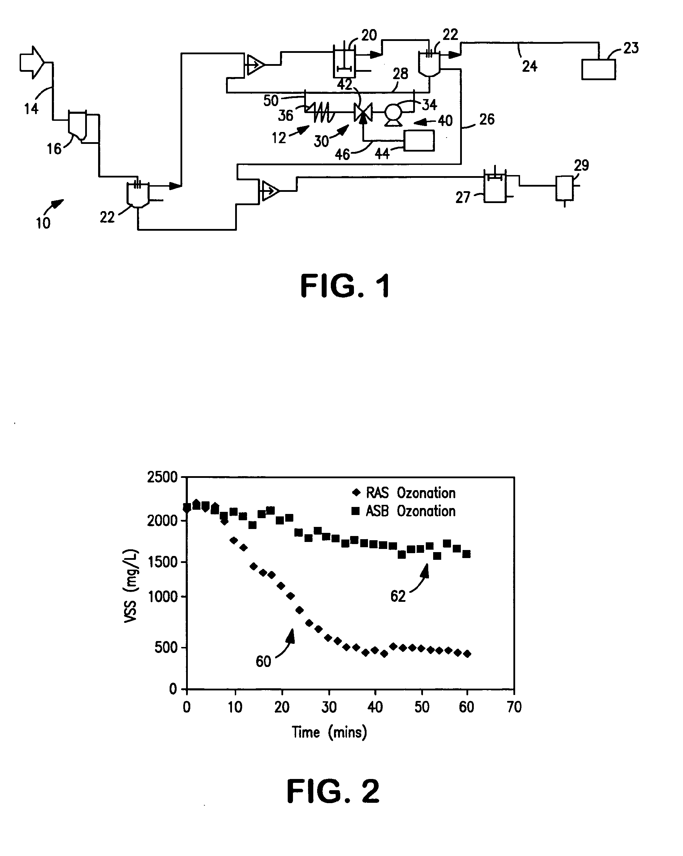

Fig. 1, shows a schematic illustration of an activated sludge treatment system (10) incorporating an embodiment of the present sludge ozonation system (12). As seen therein, the typical activated sludge treatment system (10) includes an intake conduit (14) adapted to receive an influent of wastewater, various pre-processing devices (16) and a wastewater treatment reactor (20), which can be an aeration basin, membrane bioreactor, or other system intended for the purpose of using microbial life to effect the removal of waste from water. The illustrated system also includes one or more clarifiers or filtration modules (22) adapted to separate the cleansed liquid from the accumulated sludge, an output conduit (24) for transporting the effluent or cleansed liquid to a discharge (23), a waste activated sludge line (26) and a return activated sludge (RAS) line (28) adapted to transport and return the treated stream back to the activated sludge basin (20) or other high selectivity reactor. Also shown are a digester (25) and dewatering device (27).

Unlike prior art systems, where the biosolids are included as part of the waste activated sludge (WAS), some of the biosolids are transported along the RAS line (28) from the clarifiers (22) to the activated sludge basin (20). Along the way, a prescribed amount of the liquid including the sludge and biosolids is diverted to the sludge ozonation reactor (30) for ozonation. However, the diverted stream need not be treated or modified prior to entering the reactor (30). The present wastewater treatment system (12) and process involves use of a high selectivity treatment reactor (30) designed to provide for the realization of a high selectivity reaction scheme. In the illustrated embodiment, the high selectivity treatment reactor is preferably a plug flow reactor (30) which takes a sidestream (32) from the RAS line (28).

The total sludge volume flow rate through the plug flow reactor (30) preferably ranges from about 1 times the equivalent volumetric flow rate of the waste activated sludge (WAS) to about 40 times the equivalent volumetric flow rate of the waste activated sludge (WAS). This range of between about 1 to 40 times the equivalent volumetric flow of the waste activated sludge (WAS) establishes in part, the optimum gas to liquid ratio within the plug flow reactor (30). Preferably, the gas to liquid ratio should be less than or equal to 1.0. Total sludge volumetric flow rate is adjustable and is preferably controlled in conjunction with ozone-enriched gas flow and ozone concentration in the ozone enriched gas flow in the plug flow reactor, to achieve the desired level of reduction in biosolids while minimizing required ozone dosage.

As seen in Fig. 1, the diverted sludge sidestream (32) is passed through a pump (34) to a sludge ozonation reactor shown as the plug flow reactor (30). The plug flow reactor (30) includes a sufficient length of pipe (36) that together with the flow rate assures a residence time of the sludge in the plug flow reactor (30) that is adequate for ensuring effective dissolution of the ozone and reaction of the ozone with the biosolids. The illustrated embodiments also include one or more gas injection systems (40) through which an ozone-enriched gas is introduced to the plug flow reactor (30). The preferred gas injector systems (40) comprises a source of ozone-enriched gas and one or more nozzles or venturi type devices (42) for injecting the ozone-enriched gas into the sludge. Preferably, the source of ozone-enriched gas is an ozone generator (44) coupled to a source or supply of oxygen gas (not shown). Alternatively, the ozone-enriched gas stream (46) can be supplied from specialized on-site ozone storage systems. Preferably, the desired concentration of ozone is greater than or equal to 6%. Higher concentrations of ozone are preferable as such higher concentrations help ensure that the gas to liquid ratio in the sludge contactor is maintained within an optimal range.

The ozone-enriched gas is preferably supplied to the illustrated embodiment at nominal pressures and typically pressures lower than the operating pressures within the portion of the plug flow reactor (30) proximate injecting devices (42). In this manner, the ozone-enriched gas is ingested into and through the injecting devices (42) by a vacuum draw generated by the pressure drop across the injecting devices (42). However, one skilled in the art can appreciate embodiments where the ozone-enriched gas is supplied at pressures higher than the pressure within the plug flow reactor (30) or other gas-liquid contacting enclosure.

The gas injector system (40) also includes a suitable controlling means or mechanism (not shown) that allows operative control of the injection rate, timing, and volume of ozone-enriched gas. Control of the gas injection rate, injection timing, and volume of ozone-enriched gas is targeted to provide efficient gas-liquid contacting and to promote optimal dissolution of ozone into the liquid stream flowing through the plug flow reactor (30). More particularly, control of the gas injecting system is preferably adjusted to be within a prescribed range of gas flow to liquid flow ratio, wherein the gas flow is ascertained from the injection rate, timing and volume of gas through the injecting devices (42) and the liquid flow represents the flow of sludge through the plug flow reactor (30). The preferred range of gas to liquid ratios is less than or equal to about 1.0. This gas to liquid ratio ensures that the gas or ozone is suitably dispersed in the liquid and further ensures that there is not an excess of gas in the fluid mix. Excessive back-mixing and churn is minimized. More importantly, the above-described gas to liquid ratio together with other related flow characteristics operate to minimize excessive back-mixing and churn as well as avoid stratification of the respective flows.

Having passed through the plug flow reactor (30), the ozonated sludge is returned to the plant RAS line (28) via a return line (50). Alternatively, the ozonated sludge or liquid stream exiting the plug flow reactor (30) may be returned to the activated sludge basin (20) in a separate line from the rest of the RAS flow, or may be returned to a different portion of the wastewater treatment plant. Generally, if the main RAS flow is going to an anoxic or anaerobic basin, then it may be preferable for the ozonated sludge (which is now highly oxygenated also) to go to an oxic or aerobic basin. Otherwise the oxygen content of the ozonated sludge could disrupt the conditions required in the anoxic or anaerobic stages.

At the end of the RAS line (28) or return line (50) is an optional ejector mechanism, eductor, or exit nozzle arrangement (not shown) adapted to return the ozonated sludge at the surface or at a sufficient depth in the activated sludge basin (20) and to ensure good mixing of the ozonated sludge with the bulk liquid in the activated sludge basin (20). The ejector mechanism or exit nozzle arrangement (not shown) also serves to promote recovery of oxygen in the above-identified process.

The operating principles behind the disclosed sludge ozonation treatment system involve the contacting of the biosolids and dissolved ozone in a plug flow reactor, in which the primary contact and reaction of the oxidant (dissolved ozone) and the biosolids occurs. The present process requires the effective gas-liquid contacting between the liquid stream of sludge or mixed liquor and an ozone-enriched gas to promote efficient dissolution of ozone in the liquid stream. Effective gas-liquid contacting is achieved with properly designed plug flow reactors and ozone-enriched gas injection techniques.

In the reaction between the ozone-enriched gas and the biosolids in the plug flow reactor, the cell walls of the bacterial cells are breached or weakened as a result of the ozone induced chemical oxidation of the cellular walls of the bacteria. This breaching of the bacteria cell walls is known as lysis and it leads to the release of the cellular content of the bacterial cells. The cellular content is generally a liquid matrix which is comprised of proteins, lipids, polysaccharides and other sugars, DNA, RNA and organic ions. As a result of the lysis, the solid cells of the biosolids, which would otherwise have been accumulated and discharged in the solids handling process, are transformed to substrate (COD) components and subsequently consumed by the bacteria in the activated sludge treatment basin.

A plug-flow reactor is used to achieve a high selectivity of the lysis reaction by providing for a narrow range of contact time between excess bacteria cells or biosolids and dissolved ozone, so that ozone is used only for or predominately for oxidation process leading to bacteria cell lysis ("primary reaction"). Ideally, the ozone dosage and liquid-gas contact time is limited so as not to further oxidize the cell contents ("secondary reactions"). This provides for the most efficient use of ozone, leading to the maximum sludge reduction at the minimum ozone dosage. Preferred contact time ranges between about 10 to 60 seconds.

The ozone dosage ingested into the sludge is also controllable either by adjustments in ozone concentration in the gas flow or adjustments in flow rate of ozone-enriched gas injected into the sludge or both. Ozone dosage control is targeted to achieve the desired cell lysis activity at minimum ozone usage.

Turning now to Fig. 2, there is illustrated a graph depicting the operating performance of an activated sludge treatment process with ozonation of sludge in the plug flow reactor in accordance with the disclosed embodiments as compared to a sludge reduction process as taught in the prior art comprising an activated sludge treatment process with ozonation applied in a continuous stirred reaction mode to a portion of the RAS, which is then returned directly to the activated sludge basin. The same ozone flow rate is applied in both examples. As seen therein, the steeper profile of the curve (60) associated with the present ozonation process indicates a faster rate at which the lysis process occurs and an overall enhanced reduction or elimination of solids per unit of ozone applied. Approximately 1600 mg/L of solids are removed within the initial 40 minutes using the current ozonation process as depicted by curve (60) compared to about 400 mg/L of solids removed using conventional ozonation process as depicted by curve (62), with the same total dosage of ozone applied in both cases.

Table 1 shows another comparison of biosolids production in a wastewater treatment facility using the above described ozonation process with biosolids production in the same wastewater treatment facility without use of the present sludge ozonation reactor and associated process.

Also, Table 2 shows a comparison of the sludge reduction performance of presently disclosed sludge ozonation system and process to various other reported sludge ozonation examples. As seen therein, the Removal Factor (i.e. kg Total Sludge removed per kg of Ozone used) of the presently disclosed sludge ozonation system far exceeds the apparent Removal Factor of systems disclosed in prior art literature.

**Table 1. Biosolids Reduction**

| | **w/o Ozonation System** | **w/Ozonation System** |
|---|---|---|
| COD Removed (per day) | 10,000 kg | 10,000 kg |
| Ozone Consumed (per day) | 0 kg | 70 kg |
| BioSolids (SS) Production Rate | .35 kg SS/kg COD | .21 kg SS/kg COD |
| BioSolids (SS) Produced | 3500 kg | 2100 kg |
| Ozone Dosage (kg Ozone/kg SS Reduced) | 0 | .05 |
| % BioSolids Reduced | 0% | 40% |
| Ratio - kg BioSolids Reduced/kg Ozone | 0 | 20 |

**Table 2. Sludge Reduction System Comparisons**

| Reference | Ozone Dosage (kg Ozone/kg Sludge Treated) | Ozone Consumption (kg Ozone per kg Sludge Reduced) | Removal Factor (kg Sludge Reduced per kg Ozone) |
|---|---|---|---|
| Yasui et al (1996) Wat. Sci. Tech (3-4) pp 395-404 | 0.05 | 0.165 | 6.06 |
| Sakai et al (1997) Wat. Sci. Tech 36-(11) pp 163-170 | NR | 0.133 | 7.52 |
| Sakai et al (1997) Wat. Sci. Tech 36-(11) pp 163-170 | NR | 0.148 | 6.76 |
| Sakai et al (1997) Wat. Sci. Tech 36-(11) pp 163-170 | 0.034 | 0.178 | 5.62 |
| Kobayashi et al (2001)Proceedings of the 15th Ozone World Conference, London | NR | 0.250 | 4.00 |
| Sievers et al (2003) Proc. of the 3rd Conf for Water and Wastewater Treatment, Goslar | 0.05 | 0.395 | 2.53 |
| Present Sludge Ozonation System | 0.003 - 0.01 | 0.050 | 20.00 |

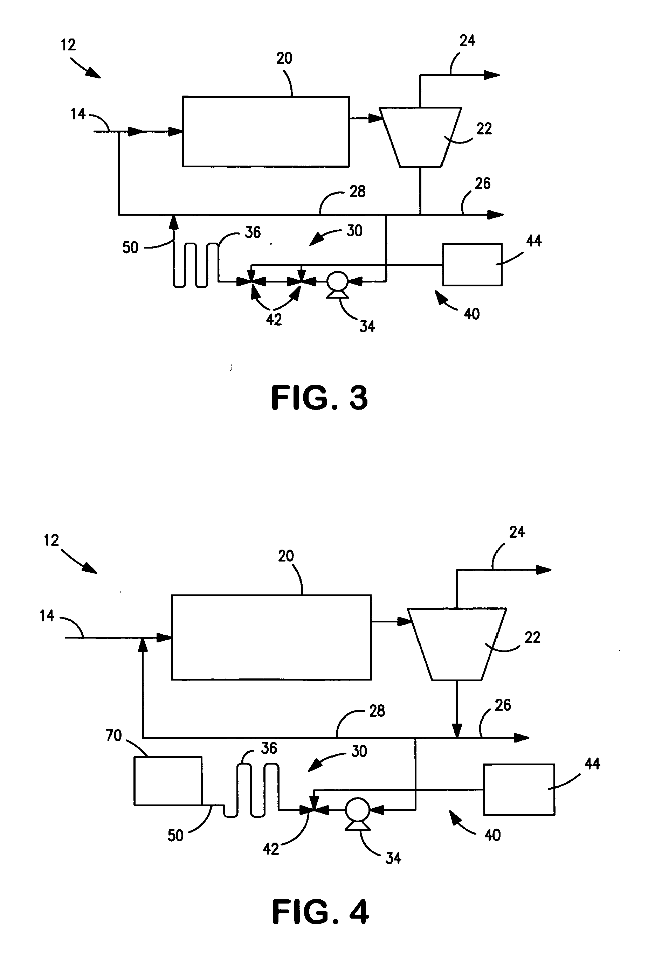

Figs. 3-8 illustrate alternate embodiments of the present sludge treatment process. In particular, Fig. 3 illustrates an embodiment of the sludge treatment process wherein ozone-enriched gas is injected or otherwise introduced at multiple locations at or proximate to the plug flow reactor (30). Multiple point injection can be beneficial to more precisely control or realize improved gas-liquid contacting that needs to occur in the plug flow reactor (30).

Fig. 4 also illustrates another embodiment of the present wastewater treatment system and process wherein the return conduit (50) from the high selectivity reactor (30) is not returned directly to the continuously stirred tank reactor or activated sludge basin (20), but rather to some other post-treatment process downstream of the plug flow reactor (30) such as a digester, sludge stabilization unit, or secondary treatment basin (70). In such embodiment, it is conceivable to inject chemical agents other than ozone, such as chlorine, biocides, polymers, odor control agents, or even other gas mixtures suitable to carry out the desired treatment process in the high selectivity treatment reactor.

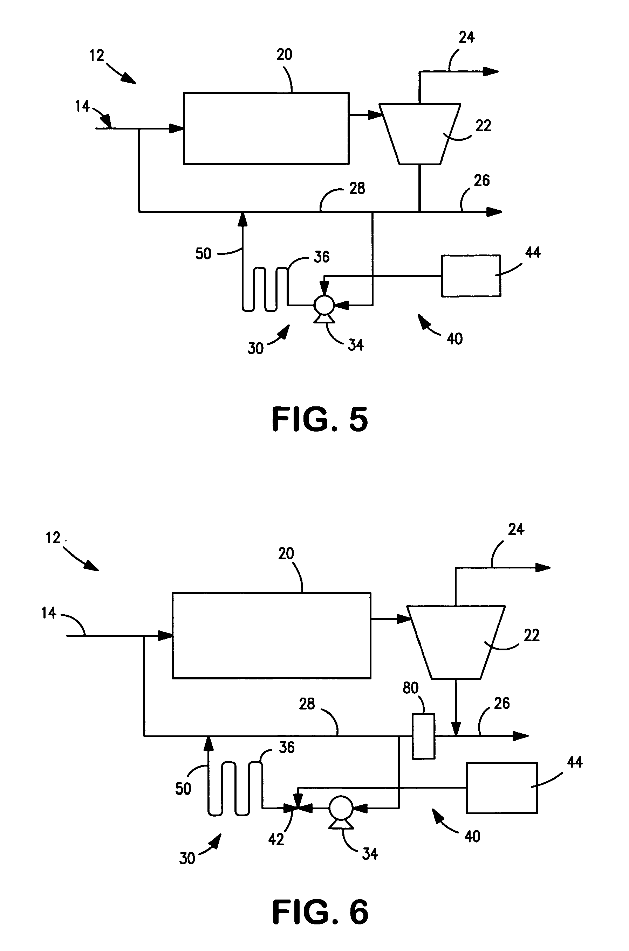

Fig. 5 illustrates an embodiment of the present sludge treatment system and process wherein the plug flow reactor (30) includes a pump (34) and ozone-enriched gas injection system (40) adapted to inject the ozone-enriched gas at or near the pump (34).

Fig. 6 illustrates yet another embodiment of the sludge ozonation system (12) where the sludge for treatment in the plug flow reactor (30) is preprocessed via a sludge thickener or other device for concentration of solids (80). Alternatively, the sludge to be diverted to the plug flow reactor (30) may be diluted with water (not shown) to yield a liquid stream with lower solids concentration entering the plug flow reactor (30).

Still another pre-processing or pre-treatment technique that may be employed with the disclosed embodiments of the invention involves passing the sludge through a digester or other means for sludge stabilization or solids handling prior to diversion to the plug flow reactor. Still other sludge pre-treatment techniques compatible with the present sludge ozonation system and process would include the addition of solubilizing agents to the sludge, application of ultrasonic waves, homogenization, and other mixing or agitation means. Also, the use of chemical agents that facilitate the lysis of the bacteria cells or enhance the capacity for digestion of the sludge could be used.

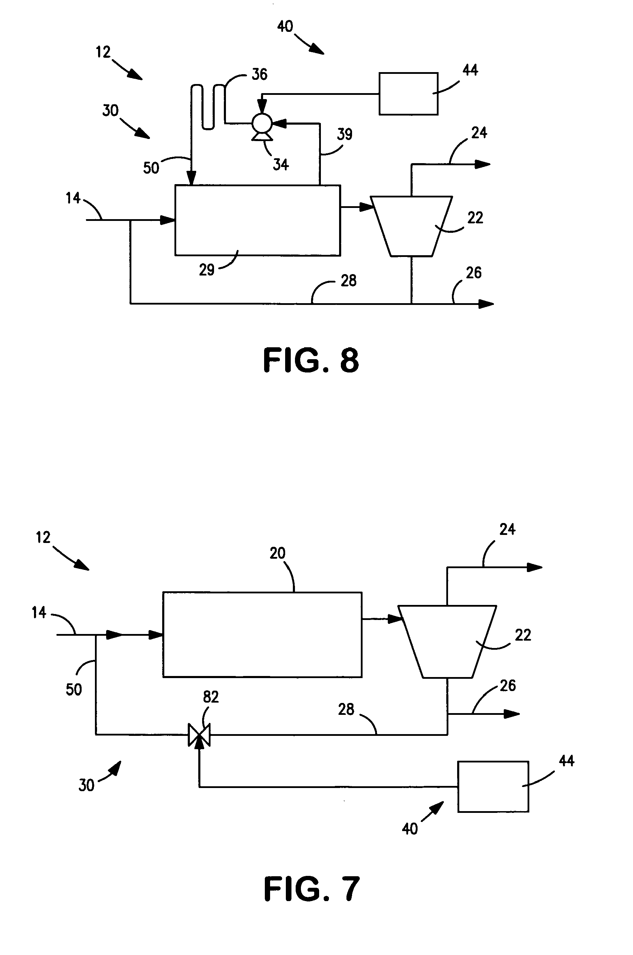

Fig. 7 illustrates an embodiment of the present sludge ozonation system (12) and method where the initial gas-liquid contacting between the ozone-enriched gas and liquid stream occurs upstream of the plug flow reactor (30) and/or in the RAS line (28). In the illustrated embodiment a gas-sludge contactor device (82) such as spargers, diffusers, venturi devices or high velocity mixing nozzles is disposed upstream of the plug flow reactor (30). The gas-sludge contactor device (82) discharges the mix to the plug flow reactor (30) where the bacterial cell lysis and other reactions occur.

In those embodiments of the present sludge ozonation system and process where the initial gas-liquid contacting occurs in the RAS line (28) or upstream of the plug flow reactor (30), the ozone-enriched gas may be supplied to the headspace above the liquid stream or may be supplied under pressure to a prescribed mixing region at a prescribed orientation relative to the liquid stream (e.g. the impeller region of a mechanically agitated gas-sludge contactor device or injecting devices such as nozzles, spargers, and diffusers which are oriented at a prescribed angle and distance vis-à-vis the liquid surface.)

Fig. 8 depicts another alternate embodiment where the treated liquid stream is not clarifier underflow or otherwise diverted from the RAS but rather is a 'mixed liquor' fluid drawn via conduit 39 from the aerated basin 29. Again, in this embodiment, it is conceivable to inject chemical agents other than ozone, such as chlorine, pH adjusting-agents, biocides, odor control agents, or even other gas mixtures such as carbon dioxide, nitrogen, oxygen, ozone, and mixtures thereof, suitable to carry out the desired treatment process to the sludge stream in the high selectivity treatment reactor.

For activated sludge treatment systems employing a membrane bioreactor configuration, the alternate arrangement would likely be similar to that illustrated in Fig. 8 but would not involve the use of a clarifier and instead would use a polymeric or ceramic membrane unit (not shown) within the aeration basin. The diverted liquid stream would be a mixed liquor that is directed to the plug flow reactor or other high selectivity treatment reactor.

The efficient and cost effective ozonation of sludge in the above-described embodiments requires the presence of three process conditions (i) the use of the ozone predominately for the lysis or breaching of the cells i.e., achieving a high selectivity for the lysis reaction; (ii) limiting exposure of the totally or partially lysed cells to additional ozone within the reactor, as this could lead to the complete release of the cellular contents in the reactor and the subsequent costly chemical oxidation of the released substrates by the additional ozone, rather than by the much cheaper option of bio-oxidation of the released substrates by the bacterial cells in the activated sludge basin; and (iii) the realization of a very narrow range of residence time distributions for the bacterial cells within the reactor.

By the use of a plug flow reaction approach, all of these desirable process conditions can be realized within the reactor or contactor. The plug flow reaction approach is attained specifically by designing for the sludge-ozone flow to occur with minimal back-mixing, and for the contacting to occur mostly within a mostly tubular configuration. Specifically, the illustrated embodiments have a prescribed or controlled residence time and the achievement of high selectivity of the lysis reaction. In the above-described embodiments, a plug-flow reaction is used to achieve a high selectivity of the lysis reaction by providing for a narrow range of contact time between cells and dissolved ozone (i.e. narrow residence time distribution), so that ozone is used only for the reactions leading to cell lysis ("primary reactions"), and so that ozonation does not continue so as to further oxidize the cell contents ("secondary reactions") nor to oxidize the products of the secondary reactions ("tertiary reactions"). This provides for the most efficient use of ozone, leading to the maximum biosolids or sludge reduction at the minimum ozone dosage.

As described with respect to the illustrated embodiments, one or a multiplicity of gas injection points are employed to match the rate of ozone supplied for dissolution to the rate of reaction of biosolids with the dissolved ozone along the prescribed length of the plug flow reactor. This avoids over or under supply of ozone, promoting efficient use of ozone for cell lysis while avoiding use of ozone for oxidation of cell contents.

As indicated above, chemical agents or gases other than ozone could be applied in the high selectivity reactor either directly to the RAS or to a sidestream of activated sludge. Other chemical agents such as chlorine, pH adjusting-agents, biocides, odor control agents, or even other gas mixtures such as carbon dioxide, nitrogen, oxygen, ozone, and mixtures thereof, could be suitable to carry out the desired treatment process to the sludge flow in the high selectivity treatment reactor.

### Industrial Applicability

In utilizing the presently disclosed embodiments of the present sludge treatment process, it is desirable to control selected parameters, either through design of the system or in operation of the system. Preferably, the rate of ozone supplied for dissolution is correlated to the rate of reaction of biosolids with the dissolved ozone along the length of the plug flow reactor. This correlation of the ozone supply with the rate of biosolids reaction within the plug flow reactor avoids over-supply or under-supply of ozone and thereby promotes the efficient use of ozone for bacteria cell lysis while avoiding the use of ozone gas for the secondary reactions.

The plug flow reactor with ozone injection is designed and operated in a manner such that a single pass of sludge through the plug flow reactor achieves a nearly complete and substantially uniform lysis of unneeded or excess bacterial cells. Preferably, by varying the volume of sludge that is diverted and processed through the plug flow reactor, closely managing the residence time distribution, or varying the ozone dosage, it is possible to control the amount of sludge that is reduced. Alternatively, the high selectivity reactor can be designed and operated in a manner where several passes through the reactor are required to achieve the desired sludge removal. Also, since the residence time obtained in a Batch Reactor System is controlled within a narrow range as with the plug flow reactor, it is possible to attain good reaction selectivity with a batch reactor in lieu of a plug flow reactor.

Typical values for the Food-to-Microorganism (F/M) ratio, i.e., the ratio of the grams of substrate material entering into the activated sludge basin on a daily basis compared to the quantity in grams of bacterial cells in the activated sludge basin, range from about 0.04 to 2.0 grams substrate material per day/gram of bacterial cells, depending on the type of the activated sludge process that is utilized. Likewise, the yield of newly synthesized bacterial cells following the bacterial consumption of substrate material is about 0.2 to 0.6 kg of biosolids per kg of substrate material consumed. Thus, using the present process for ozonation of sludge, one would model or empirically determine the amount of sludge to be diverted to the plug flow reactor, the residency time, and the amount of ozone to be injected into the reactor that is necessary to reduce between about 0.2 to 0.6 kg of sludge times the average mass (in kg) of new substrate material introduced into the activated sludge basin per day. From an economic standpoint, one can calculate the cost savings of eliminating the solids handling associated with the volume of biosolids against the cost of the ozone consumed in the process.

The above-identified methods and systems for the treatment of sludge using ozone can be utilized alone or in conjunction with other sludge reduction techniques. Moreover, each of the specific steps involved in the preferred process, described herein, and each of the components in the preferred systems are easily modified or tailored to meet the peculiar design and operational requirements of the particular activated sludge treatment system in which it is used and the anticipated operating environment for given activated sludge treatment process.

For example, the source gas used in conjunction with the ozone generation system could comprise air, air enriched with oxygen, pure oxygen gas, or nearly pure oxygen gas. However, because the core activated sludge treatment process also has a basic oxygen requirement, the use of nearly pure or pure oxygen gas as a source gas is preferred. In addition, the use of pure or nearly pure oxygen source gas and the injection of the ozone-enriched gas in or near the plug flow reactor could be controlled in a manner such that all or a substantial fraction of the overall oxygen requirement for biological treatment in the activated sludge process in the activated sludge basin is provided by the sludge ozonation system.

From the foregoing, it should be appreciated that the present invention thus provides a method and system for the treatment of sludge using ozone-enriched gas. While the invention herein disclosed has been described by means of specific embodiments and processes associated therewith, numerous modifications and variations can be made thereto by those skilled in the art without departing from the scope of the invention as set forth in the claims or sacrificing all its material advantages.

## Claims

1. A wastewater treatment system comprising:
a wastewater treatment reactor adapted for receiving an influent of wastewater and discharging a liquid stream;
a diversion conduit in fluid communication with the wastewater treatment reactor adapted for diverting a portion of the liquid stream discharged from the wastewater treatment reactor;
a high selectivity treatment reactor coupled to the diversion conduit and adapted to receive the portion of the liquid stream; and
a chemical introduction subsystem disposed in operative association with the high selectivity treatment reactor and adapted to introduce a prescribed chemical to the high selectivity treatment reactor for treatment of the liquid stream.

2. The wastewater treatment system of claim 1 wherein the high selectivity treatment reactor further comprises a plug flow reactor.

3. The wastewater treatment system of claim 1 wherein the wastewater treatment reactor further comprises a membrane bioreactor.

4. The wastewater treatment system of claim 1 wherein the wastewater treatment reactor further comprises an activated sludge basin.

5. The wastewater treatment system of claim 4 further comprising a return conduit interposed between the high selectivity treatment reactor and the wastewater treatment reactor for returning the treated liquid stream to the wastewater treatment reactor.

6. The wastewater treatment system of claim 5 further comprising an activated sludge conduit coupled to the wastewater treatment reactor and wherein the diversion conduit is connected to the activated sludge conduit and the liquid stream includes a high concentration of activated sludge.

7. The wastewater treatment system of claim 5 wherein the prescribed chemical is ozone and wherein the ozone facilitates lysis of biosolids within the high selectivity treatment reactor and aeration of the liquid stream.

8. The wastewater treatment system of claim 5 wherein the prescribed chemical is a gas selected from the group consisting essentially of carbon dioxide, oxygen, ozone, nitrogen, air and mixtures thereof.

9. The wastewater treatment system of claim 5 wherein the liquid stream is a mixed liquor stream.

10. The wastewater treatment system of claim 1 wherein the prescribed chemical is a biocide.

11. The wastewater treatment system of claim 1 wherein the prescribed chemical is an agent adapted to enhance microbial growth.

12. The wastewater treatment system of claim 1 wherein the prescribed chemical is an agent adapted to reduce volume and moisture content of sludge.

13. The wastewater treatment system of claim 1 wherein the prescribed chemical is an odor-control agent.

14. A method of treating wastewater comprising the steps of:
receiving an influent of wastewater into a wastewater treatment reactor;
oxidizing biosolids within the wastewater treatment reactor;
discharging a liquid stream from the wastewater treatment reactor;
diverting a portion of the liquid stream discharged from the wastewater treatment reactor either directly or indirectly to a high selectivity treatment reactor;
introducing a prescribed chemical to the high selectivity treatment reactor for treatment of the liquid stream; and
returning the treated liquid stream to the wastewater treatment reactor.

15. The method according to claim 14 wherein the prescribed chemical is ozone and the method further comprising the steps of:
inducing lysis of biosolids within the high selectivity treatment reactor with the ozone; and
aerating the liquid stream within the high selectivity treatment reactor with the ozone for further bio-oxidation within the wastewater treatment reactor.

16. The method according to claim 14 wherein the prescribed chemical is a gas selected from the group consisting essentially of carbon dioxide, oxygen, ozone, nitrogen, air, and mixtures thereof.
